# FASCICULE DE BREVET EUROPEEN

(11) **EP 2 785 492 B1**
(45) Date de publication et mention de la délivrance du brevet: **01.05.2019**
(21) Numéro de dépôt: 12795803.1
(22) Date de dépôt: 03.12.2012
(51) Int. Cl.: B23P 15/00, B23P 23/04, B23P 17/00, B23Q 39/02, B23K 26/34, G05B 19/4099, B21D 22/16, B23K 37/04, B23K 26/08, B23K 26/00

(54) **DISPOSITIF D'USINAGE PAR ADDITION DE MATIÈRE ET MISE EN FORME COMBINÉES**
BEARBEITUNGSVORRICHTUNG DURCH KOMBINIERTE ZUGABE VON MATERIAL UND FORMEN
MACHINING DEVICE BY COMBINED ADDITION OF MATERIAL AND SHAPING

(30) Priorité: 02.12.2011 FR 1161126
(43) Date de publication de la demande: 08.10.2014
(73) Titulaire: Ecole Centrale De Nantes, 44300 Nantes (FR); Centre National de la Recherche Scientifique (C.N.R.S.), 75016 Paris (FR)
(72) Inventeur: HASCOET, Jean-Yves, F-44300 Nantes (FR); CARABIN, Gilles, F-49230 Germain St Moine (FR); MOGNOL, Pascal, F-35000 Rennes (FR)
(74) Mandataire: Ipside
(86) Numéro de dépôt international: PCT/EP2012/074268
(87) Numéro de publication internationale: WO 2013/079725

(56) Documents cités:
- EP-A1- 0 529 816
- EP-A1- 0 574 580
- EP-A1- 1 614 497
- WO-A1-2009/050229
- DE-A1- 19 533 960
- GB-A- 2 472 685
- JP-A- 2010 280 173
- US-A- 3 342 051
- US-A- 6 144 008
- US-A1- 2009 226 272
- FRANZEN V ET AL: "Rapid prototyping in der Blechumformung", VDI Z, SPRINGER VDI VERLAG, DE, vol. 151, no. 4, 1 avril 2009 (2009-04-01) , pages 67-69, XP001547743, ISSN: 0042-1766

## Description

L'invention concerne un dispositif d'usinage par addition de matière et mise en forme combinées selon le préambule de la revendication 1. Un tel dispositif est connu du document DE 19533960.Le dispositif objet de l'invention est plus particulièrement adapté à la réalisation de pièces dont la forme tridimensionnelle ou la qualité microgéométrique des surfaces n'est pas réalisable par les procédés d'usinage par addition de matière et de mise en forme lorsque ceux-ci sont appliqués séparément. Dans la suite, un procédé est considéré comme appliqué séparément d'un autre lorsque la pièce, en cours de réalisation, est repositionnée dans l'espace machine, que ce repositionnement soit obtenu par un changement de machine, ou par un transfert de la pièce d'une zone d'une machine-transfert à une autre zone de cette machine-transfert, la pièce étant conservée sur son montage ou sa palette d'usinage, ou encore, lorsque la pièce restant montée sur une même machine, la configuration de ladite machine est changée de manière significative de sorte que l'origine des axes ou le comportement dynamique de la machine s'en trouve modifiés, par exemple, par le changement de la tête d'usinage, ou encore que les tables de compensation des mouvements, enregistrées dans la commande numérique de la machine, soit modifiées, ou ne reflètent plus le comportement de la machine si elles sont conservées dans la même configuration. Dans la suite, le terme « phase d'usinage » désigne ainsi une succession d'opérations d'usinage réalisées sur une même pièce, sans que celle-ci ne change de poste d'usinage, ou que la configuration du poste d'usinage ne soit modifiée et sans que la mise en position de la pièce ne soit modifiée.

Dans tout le texte le terme « usinage » s'applique à l'action d'usiner, et le verbe « usiner » est pris dans le sens général de travailler un matériau ou une pièce sur une machine-outil.

Les procédés d'usinage tant par addition que par enlèvement de matière sont connus de l'art antérieur. La demande de brevet japonais JP-A-2 010 2 801 73 décrit un dispositif et un procédé comprenant la combinaison, sur une même machine, d'un procédé d'usinage additif et d'un procédé d'usinage par enlèvement de matière. Selon cet art antérieur, la mise en oeuvre de ce procédé utilise deux dispositif d'usinage distincts montés sur le même bâti mais utilisant des axes de déplacement différents. Ainsi, selon cet art antérieur, un premier ensemble d'effecteurs est utilisé pour déposer un lit de poudre et fritter une partie de ce lit de poudre par un faisceau laser dont la trajectoire dans ledit lit est déterminée par les mouvements d'un miroir, et un second ensemble d'effecteurs comprend une broche de fraisage dont les mouvements sont pilotés par des axes à commande numériques distincts des axes pilotant les mouvements du miroir. Il s'agit en fait de deux machines distinctes partageant le même bâti. Par ailleurs, le procédé d'enlèvement de matière de cet art antérieur a pour objet de favoriser les conditions de mise en oeuvre du procédé d'usinage additif en retouchant la surface de matière déposée de sorte à corriger la géométrie de celle-ci et à la nettoyer de toute pollution afin de favoriser l'accrochage de la couche de matière déposée lors de l'opération suivante. Ainsi, le but de cet art antérieur vise avant tout la santé matière de la pièce réalisée par usinage additif, sans objectif particulier vis-à-vis de la précision des opérations d'usinage combinées, précision qui ne pourrait être atteinte du fait du changement de phase entre l'opération d'addition et l'opération d'enlèvement de matière.

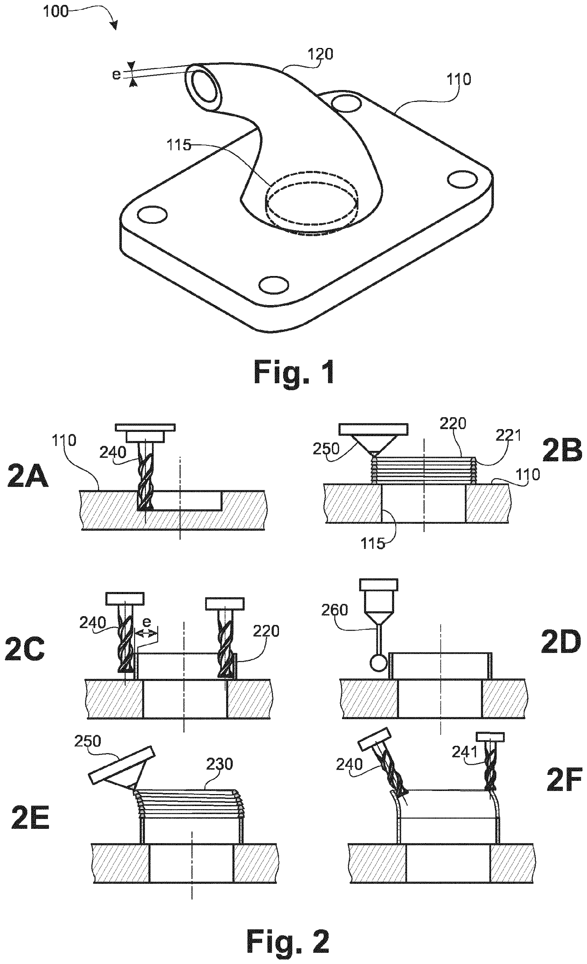

L'invention vise notamment, mais non exclusivement, la réalisation d'une pièce de forme complexe telle que représentée figure 1. Selon cet exemple, nullement limitatif et destiné simplement à illustrer le problème technique résolu par l'invention, la pièce (100) dont la réalisation est visée, comprend une platine (110) plane et rigide, constituant le substrat, comportant un alésage (115) en son centre et une prolongation creuse (120) de forme complexe et conique centrée sur ledit alésage (115), qui peut être obtenue par addition de matière. L'ensemble de ladite pièce (100) est réalisé avec des contraintes sur l'état de surface, tant sur la partie externe que sur la partie interne de la prolongation de forme complexe (120), par exemple, une rugosité Ra de 1,6 µm (10⁻⁶ mètres) selon la norme ISO 4 287. Par ailleurs, ladite pièce doit également être réalisée selon des contraintes géométriques telles qu'une tolérance de concentricité entre l'alésage (115) de la platine et celui de la prolongation (120) conique au niveau de ladite platine, ainsi qu'une tolérance sur l'épaisseur (e) des parois de la prolongation (120). À titre d'exemple ces tolérances sont de 0,05 mm. Selon les procédés connus de l'art antérieur, une telle pièce (100), avec de telles contraintes de réalisation, ne peut être réalisée en un seul posage et par suite, l'obtention des précisions désirées est délicate et peu compatible avec une fabrication en série.

Dans la suite, le terme « substrat » désigne la matière initiale de la pièce sur laquelle est déposée de la matière par un procédé d'usinage par addition, la matière ainsi déposée pouvant être de même nature ou de nature différente de la matière du substrat.

La réalisation de la pièce (100) représentée figure 1, au cours d'un même posage, nécessite l'utilisation d'un mouvement rotatif, et même de deux mouvement rotatifs, tant pour les opérations d'usinage additif que pour les opérations d'usinage par enlèvement de matière, ou usinage ablatif. Typiquement une telle pièce doit être réalisée sur une machine comprenant au moins 5 axes de déplacement relatif entre la pièce et l'outil, ces 5 axes comprenant, par exemple, 3 translations orthogonales et 2 rotation selon des axes orthogonaux. La réalisation de cette pièce requiert l'utilisation de 5 axes en continu, c'est-à-dire que l'outil d'usinage doit être en permanence orienté par rapport à la surface usinée. Les architectures de machine à 5 axes sont variées et connues de l'art antérieur. Pour permettre une certaine portabilité des programmes usinage entre les différentes architectures de machine, la programmation est, selon une méthode connue et répandue, réalisée en décrivant le mouvement de l'extrémité de la partie active de l'outil. Pour la mise en oeuvre du programme sur la machine, chaque outil est associé à des « jauges » c'est à dire un fichier de valeurs numériques qui définissent la position de la partie active dudit outil dans le repère la machine lorsque cet outil est monté dans la broche de ladite machine. Ce fichier de jauges est intégré aux tables de transformation cinématique enregistrées dans la mémoire de la commande de la machine, lesdites tables de transformation traduisant en termes de déplacement des axes motorisés, les ordres de déplacement programmés de sorte à obtenir la trajectoire désirée. Ainsi, particulièrement lorsque l'architecture de la machine est de type parallèle, un déplacement simple, tel qu'une translation, conduit à la mobilisation de 5 axes motorisés, voire plus selon es architectures.

Pour atteindre la précision d'usinage requise, particulièrement à grande vitesse d'avance, les machines d'usinage à commande numérique sont pourvues, selon l'état de l'art de tables de compensation. Ces tables permettent de corriger les erreurs, notamment mécaniques, de la machine. Ces erreurs, ont diverses origines : défaut de fabrication, variation de rigidité, déformation, dilatation thermique etc... Ainsi, toute machine à commande numérique comporte un volume de travail dans lequel sa précision et ses performances sont optimales, et en dehors duquel les performances chutent. Suivre une trajectoire avec un outil dont les jauges conduisent à sortir de ce volume de fonctionnement optimal, ou dont la masse qu'il ajoute à la structure en modifie le comportement dynamique, conduit à faire travailler la machine dans des conditions dégradées, ou nécessiterait de recharge de nouvelles tables de compensation, ce qui est équivalent à utiliser une autre machine et à changer de phase d'usinage.

Le document EP 1 614 497 décrit un dispositif et un procédé d'usinage combinant, sur une même machine, un usinage additif et un usinage ablatif. La transition d'un mode d'usinage à l'autre est réalisée en montant à l'extrémité de la tête d'usinage, ou directement dans la broche de la machine, un dispositif d'usinage additif. Ce dispositif d'usinage additif comporte un moyen de fusion, un dispositif de débit de matière et un moyen de soufflage. Ainsi, le montage de ce dispositif d'usinage additif sur la tête de la machine modifie significativement la masse en mouvement et le comportement de la machine lors des usinages additifs diffère du comportement de cette même machine au cours des usinage ablatifs.

Le document EP 0 529 816 décrit un dispositif et un procédé d'usinage combinant usinage additif et usinage ablatif. Le dispositif d'usinage additif est monté en permanence à côté de la broche d'usinage ablatif de sorte que la masse embarquée est sensiblement la même dans les deux configuration d'usinage. Ce document enseigne d'ajouter le dispositif d'usinage additif sur une machine d'usinage par enlèvement de matière existante. Ainsi, pour conserver les capacités de changement automatique d'outil et éviter les interférences entre ce dispositif et la pièce lors des opérations d'usinage ablatif, le dispositif d'usinage additif est placé distant de la broche de la machine. Ainsi, lors de l'utilisation de l'usinage additif la machine travaille dans un volume, aux frontières voir en dehors de son volume de travail optimal. L'incidence est modérée lorsque la machine est en architecture série et ne comprend que 3 axes de déplacement linéaires orthogonaux, comme décrit dans ce documents. De plus, ce document enseigne de réaliser par usinage additif une préforme, c'est-à-dire un bloc de matière qui constitue en quelque sorte un brut. La précision est obtenue par l'usinage ablatif, de sorte que la précision requise pour l'usinage additif est inférieur de plusieurs ordre de grandeur à la précision de la machine. La solution technique enseignée dans ce document n'est pas applicable au cas où l'une des usinages, additif ou ablatif, requiert un déplacement le contrôle continu de l'orientation de l'outil par rapport à la surface réalisée.

Le document DE 19533960 divulgue un procédé de fabrication combinant un usinage additif et un usinage par enlèvement de matière ainsi qu'une machine pour la mise en oeuvre d'un tel procédé. Ledit document décrit un mode de réalisation dans lequel la tête d'usinage supporte un dispositif d'usinage additif par projection de poudre en fusion et un dispositif d'usinage par enlèvement de matière comprenant une broche de fraisage. Ces deux dispositifs sont montés en permanence sur la tête d'usinage.

L'invention vise à résoudre les inconvénients de l'art antérieur et concerne à cette fin un dispositif selon la revendication 1.

Des modes de réalisation préférés sont décrits dans les revendications dépendantes.

Ainsi, le dispositif objet de l'invention permet de passer de l'usinage par addition à l'usinage par mise en forme et vice versa à l'aide de la même tête d'usinage, mue par les mêmes moyens. La masse embarquée reste la même lors du changement d'opération d'usinage.

Les parties de la pièce, usinées au cours des opérations d'addition et de mise en forme sont parfaitement positionnées l'une par rapport à l'autre, car réalisées lors de la même phase, c'est-à-dire sans modification de la mise en position de la pièce et sans changement de configuration du poste d'usinage. L'orientation normale de la tête d'usinage par rapport aux trajectoires permet de limiter la quantité de matière déposée au stricte nécessaire et d'améliorer la qualité de surface des pièces obtenues.

L'invention peut être mise en oeuvre selon les modes de réalisation avantageux exposés ci-après, lesquels peuvent être considérés individuellement ou selon toute combinaison techniquement opérante.

Avantageusement, le dispositif objet de l'invention comprend :
d. des moyens de palpage placés sur la tête d'usinage ;
e. des moyens pour mesurer sur les axes motorisés la position desdits moyens de palpage dans l'espace machine.

Ainsi, en plus de la précision intrinsèque de la machine pour le raccordement des deux opérations d'usinage, les moyens de palpage permettent de raccorder parfaitement deux usinages successifs et de compenser des décalages notamment dus à la dilatation thermique de la pièce.

Avantageusement, les outils de mise en forme comprennent un outil de coupe. Ainsi, tant le substrat que la matière déposée sur la pièce peuvent être usinés par enlèvement de matière de sorte à calibrer leur dimension ou obtenir des états de surfaces définis.

Selon un mode de réalisation du dispositif objet de l'invention, celui-ci comprend :
f. des moyens pour communiquer un mouvement de coupe à l'outil de coupe.

Ainsi, le dispositif objet de l'invention est adapté à la réalisation d'opérations d'enlèvement de matière par fraisage ou par abrasion, notamment à la meule.

Selon un autre mode de réalisation du dispositif objet de l'invention compatible avec le mode de réalisation précédent, celui-ci comprend :
g. des moyens pour communiquer un mouvement de coupe à la pièce.

Ainsi, le dispositif objet de l'invention est adapté à la réalisation d'opérations d'usinage en tournage ou des opérations de polissage sur des pièces de révolution dont la symétrie de révolution est obtenue par le mouvement de coupe.

Avantageusement, les outils de mise en forme du dispositif objet de l'invention comprennent un outil de formage par déformation plastique de la matière. Ainsi, le dispositif objet de l'invention permet de mettre en oeuvre des opérations de formage, tant pour la mise en forme que pour le redressement du substrat ou de la matière déposée. Ce mode de réalisation est par ailleurs compatible avec les précédents.

Selon l'invention, les moyens pour réaliser un apport de matière du dispositif objet de l'invention comprennent :
ci. une buse comportant un orifice de projection de poudre métallique ;
cii. un dispositif pour la génération d'un faisceau laser coaxial à l'orifice de la buse et apte à réaliser la fusion de la poudre au cours de la projection.

Ainsi, la dépose de matière est pilotée selon des trajectoires précises, le point d'addition de la matière étant parfaitement défini dans l'espace de la machine.

Avantageusement, selon un procédé de mise en oeuvre de l'invention, une opération d'addition et une opération de mise en forme successives sont réalisées avec une masse de la tête d'usinage sensiblement constante. Ainsi les deux opérations utilisent de manière optimale des tables de compensation de la machine.

Avantageusement, l'usinage additif et l'usinage de mise en forme sont réalisés en suivant une trajectoire s'étendant selon les trois dimensions de l'espace et l'axe du jet de poudre en fusion ou de l'outil de mise en forme est orienté normalement à cette trajectoire. Ainsi

Avantageusement, l'opération de mise en forme est une opération de coupe en contournage réalisée sur une couche de matière déposée au cours d'une opération d'addition antérieure. Ainsi la couche de matière déposée peut être calibrée en termes de contour et d'épaisseur.

Avantageusement, la couche déposée au cours de l'opération d'addition est déposée sur une surface ayant fait préalablement l'objet d'une opération de mise en forme. Ainsi, outre le fait de favoriser l'accrochage de la couche déposée sur ladite surface, la combinaison des deux procédés permet d'optimiser la contribution de chacun d'eux à l'obtention de la forme désirée.

Selon un mode de réalisation avantageux, le procédé de mise en ouvre l'invention, comprend une étape consistant à réaliser une opération de palpage de la pièce avant une opération de mise en forme ou avant une opération d'addition, afin de recaler ladite opération dans l'espace machine.

Ainsi, la précision de réalisation de la pièce est améliorée, et les éventuels écarts géométriques peuvent être corrigés. Le terme « palpage » doit ici être compris dans un sens large et comprend également des procédés ou dispositifs de mesure sans contact montés dans la tête d'usinage.

Avantageusement, l'opération de mise en forme est une opération de formage incrémental. Ainsi, le dispositif objet de l'invention permet d'obtenir des formes complexes en partant de métaux en feuille.

Selon un mode de réalisation particulier d'un procédé mettant en oeuvre l'invention, le substrat et la matière déposée au cours de l'opération d'addition sont de natures différentes. Ainsi, l'opération d'usinage par addition permet, en plus de l'obtention de la forme, d'obtenir des caractéristiques particulières, notamment de dureté ou de résistance à la corrosion de la couche de matière déposée, et par suite de la pièce ainsi réalisée.

L'invention est exposée ci-après selon ses modes de réalisation préférés, nullement limitatifs, et en référence aux figures 1 à 10, dans lesquelles :
- la figure 1 montre selon une vue en perspective un exemple de pièce dont la réalisation est visée par le dispositif objet de l'invention ;
- la figure 2 représente selon une vue partielle, en coupe et de face, la succession des premières opérations correspondant au début de la réalisation de la pièce de la figure 1 par le dispositif objet de l'invention ;
- la figure 3 montre selon une vue en perspective un exemple d'architecture d'une machine à commande numérique adaptée à la mise en oeuvre de l'invention ;
- la figure 4 est une vue de profil, carter ouvert, d'un exemple de réalisation d'une tête d'usinage ;
- la figure 5 montre selon une vue de face et en perspective, un exemple de réalisation d'une tête d'usinage ;
- la figure 6 est une vue en perspective et en bout de la tête d'usinage de la figure 5, sans son carter ;
- la figure 7 représente un exemple selon une vue de dessus et en perspective d'une pièce comportant un substrat répondant à une symétrie de révolution ;
- la figure 8 est un exemple de la succession des opérations d'un procédé objet de l'invention comportant une opération de formage incrémental ;
- la figure 9 montre selon une vue en perspective et en éclaté, un exemple de réalisation d'une pièce composite sandwich ;
- et la figure 10 est un logigramme correspondant à un mode de réalisation complexe du procédé objet de l'invention.

Figure 2A, selon un exemple de mise en oeuvre du dispositif objet de l'invention, correspondant aux premières opérations pour la réalisation de la pièce (100) de la figure 1, celle-ci comprend une première étape d'usinage en fraisage de contournage pour la réalisation de l'alésage (115) dans la platine (110). À cette fin, ladite platine (110) est positionnée dans l'espace machine, et un outil de mise en forme, en l'occurrence une fraise (240), est sélectionnée.

Figure 2B, l'alésage étant réalisé, des moyens (250) d'usinage par addition de matière sont sélectionnés afin de réaliser une première partie (220) de la forme (120). Cette opération est réalisée sans changer la tête de la machine et sans modifier la mise en position de la platine (110) de sorte que la matière déposée (220) et l'alésage (115) précédemment réalisé, sont parfaitement localisés l'un par rapport à l'autre, cette précision de positionnement ne dépendant que de la précision de suivi des trajectoires de la machine. Selon un exemple de réalisation, le procédé d'usinage par addition est un procédé de projection de poudre en fusion, ladite poudre étant fondue par un faisceau laser. Un tel procédé est décrit, par exemple, dans le document EP-B-0 574 580. Il permet de réaliser un usinage par addition de matière sans liant. Ainsi, la matière déposée présente des caractéristiques mécaniques voisines de celle de la même matière qui serait mise en oeuvre par un procédé de fonderie. La dépose de strates successive produit des ressauts, ou marches (221), sur les surfaces ainsi réalisées.

Figure 2C, selon un exemple de mise en oeuvre du dispositif objet de l'invention, la partie (220) usinée par addition lors de l'opération précédente est reprise en fraisage de contournage de sorte à en calibrer l'épaisseur (e), à éliminer les ressauts et à réaliser une qualité d'état de surface visée. Ainsi, selon ce mode de réalisation, les paramètres de l'opération d'usinage par addition sont optimisés pour obtenir la meilleure qualité de matière déposée autorisée par le procédé, sans contrainte sur la géométrie exacte de la partie de matière déposée (220) celle-ci étant reprise lors de l'opération de contournage suivante. La machine n'étant pas reconfigurée entre deux opérations et la mise en position de la pièce n'étant pas modifiée, la position dans l'espace machine de la partie de matière ajoutée (220) est parfaitement connue. L'opération de contournage est ainsi réalisée sans recalage des axes. La précision de réalisation de cette opération de contournage ne dépend donc que de la précision de suivi des trajectoires de la machine.

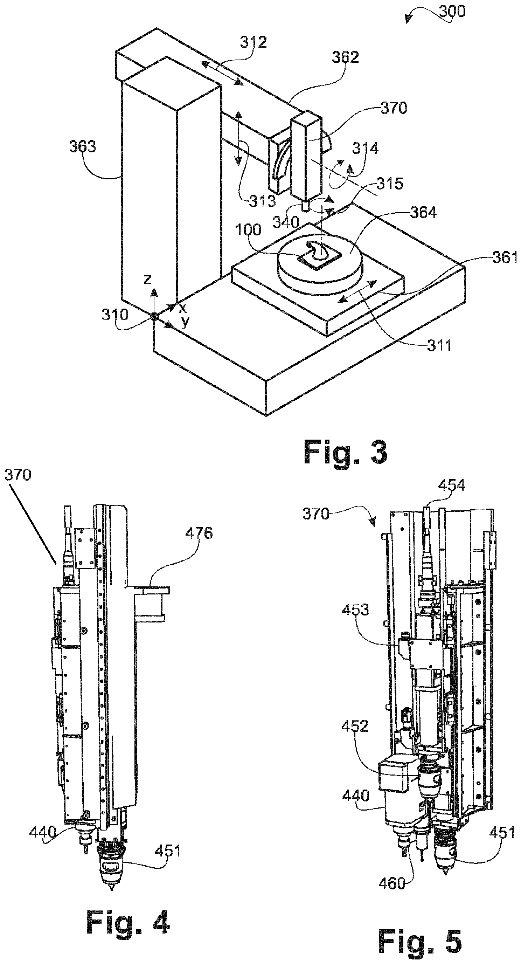

En effet, figure 3, selon un exemple de réalisation, le dispositif objet de l'invention comprend une machine (300), laquelle comprend une tête d'usinage (370) supportant un effecteur (340). Selon l'invention, ledit effecteur comprend un outil de mise en forme ou une buse d'usinage par addition, les moyens d'usinage additif et d'usinage de mise en forme étant toujours présents conjointement dans la tête d'usinage de sorte que la masse de ladite tête d'usinage est sensiblement constante, au poids de l'outil de mise en forme près. Ladite tête d'usinage (370) est déplacée dans l'espace de travail de la machine par des axes motorisés pilotés par une commande numérique. Selon cet exemple de réalisation, nullement limitatif, la machine (300) comprend trois axes de translation perpendiculaires :
- un axe horizontal (311), dit axe X, correspondant au déplacement de la table (361) de la machine ;
- un axe horizontal (312), dite axe Y, perpendiculaire au précédent (311) porté par le bélier (362) supportant la tête d'usinage (370) ;
- un axe vertical (313), dit axe Z, perpendiculaire aux deux autres, transmis au bélier (362) guidé sur une colonne (363).

Ces trois axes correspondant à des mouvements de translation sont, selon cet exemple de réalisation, associés à deux axes de déplacement rotatifs :
- un mouvement de rotation (314) autour de l'axe Y, dit axe B, appliqué à la tête d'usinage (370) ;
- un mouvement de rotation (315) autour de l'axe Z, dit axe C, porté par un plateau (364), lui-même lié à la table (361).

L'ensemble de ces axes est piloté par une commande numérique (non représentée) qui mesure la position de chaque axe par l'intermédiaire d'un capteur adapté, de sorte que la position de chaque axe est connue dans un repère (310) lié à la machine. La mise en position de la pièce (100) dans la machine consiste à déterminer la position et l'orientation de ladite pièce, c'est-à-dire de ses surfaces, dans le repère (310) de la machine. Ce mode de réalisation de la machine selon une architecture dite « série » n'est pas exclusif, et selon d'autres modes de réalisation avantageux, la machine comporte des axes motorisés configurés selon une architecture parallèle. Dans tous les cas le dispositif d'usinage objet de l'invention comprend suffisamment d'axes de déplacement de sorte que, tant l'outil de mise en forme que le moyen d'usinage additif, soient orientables en continu, selon la normale à une trajectoire s'étendant selon trois dimensions dans l'espace de travail.

La commande numérique comprend, selon des caractéristiques habituelles et connues de l'art antérieur, des tables numériques permettant, d'une part, de transformer les informations géométriques reçues des capteurs de position et de déplacement des axes dans le repère de la machine, sous la forme d'une position et d'une orientation de l'outil ou plus généralement de l'effecteur monté dans la tête d'usinage ; et d'autre part, des tables, dites de compensation, qui permettent, de compenser les déformations de la machine, les imprécisions des mouvements, voir les dilatations thermiques, afin d'assurer la concordance entre la trajectoire réelle et la trajectoire programmée de l'effecteur (370), malgré ces sources de dispersion.

Ainsi, mettre ou remettre en position ou modifier la mise en position d'une pièce (100) dans l'espace de la machine entraîne une incertitude de positionnement et d'orientation dans ladite pièce dans ledit espace, incertitude qui dépend de la précision des moyens de mesure de cette position et de la capacité à traduire cette mise en position sur le pilotage des axes de la machine. Le problème se pose avec d'autant plus d'acuité que les surfaces à repositionner dans l'espace de la machine sont des surfaces de forme complexe.

De la même manière, un changement de tête d'usinage (370) ou l'utilisation d'autres axes de déplacement, tel que réalisé selon l'art antérieur, pour passer d'un type d'effecteur à un autre, se traduit, d'une part, par une imprécision de positionnement de la nouvelle tête sur la machine et plus particulièrement par la nécessité de charger de nouvelles tables numériques de transformation géométrique et de compensation. Une telle opération ne peut être réalisée dans le même programme d'usinage. Ainsi, changer de tête sur une machine à commande numérique est équivalent à changer de machine, et même si la pièce reste en position sur la machine au cours de ce changement de tête, sa position effective et son orientation dans le repère de la machine, s'en trouvent modifiées vis-à-vis des trajectoires. Ainsi, le dispositif objet de l'invention, en évitant tant le changement de configuration de la machine que la remise en position de la pièce, permet la réalisation économique et rapide de cotes précises, telles que la cote d'épaisseur (e), figure 2C.

Figure 2D, plus particulièrement dans le cas d'un procédé d'usinage additif réalisé à chaud, tel que la projection de poudre avec fusion de ladite poudre au moyen d'un faisceau laser, la forme de la pièce est susceptible d'être modifiée entre deux opérations d'addition de matière, du simple fait de la dilatation thermique de ladite pièce (100). Le dispositif objet de l'invention comprend avantageusement des moyens de palpage (260) qui permettent de mesurer la forme précise de la pièce, et par suite, de recaler les trajectoires d'usinage additif ou de l'usinage de mise en forme.

Figure 2E, selon un exemple de réalisation du dispositif objet de l'invention, les informations géométriques issues de l'opération de palpage sont utilisées pour déposer de manière précise un deuxième tronçon (230) sur le premier (220) en sélectionnant à nouveau les moyens (250) d'usinage par addition. Selon cet exemple de réalisation, l'utilisation d'une machine (300) à 5 axes de déplacement permet d'orienter les moyens (250) d'usinage par addition pour réaliser des formes complexes.

Figure 2F, le tronçon (230) déposé lors de l'opération d'usinage par addition précédente est parachevé sur ses faces intérieures et extérieurs par les moyens (240) d'usinage par enlèvement de matière de sorte à calibrer le tronçon (230) en forme, en épaisseur et en état de surface. Selon un mode de réalisation particulier, cette opération de parachèvement comprend la reprise, avec un outil (241) adapté, du sommet du tronçon (230) déposé lors de l'opération d'addition précédente, de sorte à en façonner la forme afin d'optimiser l'accrochage de la couche de matière déposée lors de l'opération d'usinage par addition suivante. Pour chacune de ces opérations d'usinage ablatif, l'outil (240, 241) est avantageusement orienté de manière sensiblement normale à la trajectoire suivie par son extrémité active dans l'espace de travail. Le terme sensiblement normal, tient compte des orientations locales par rapport à la normale visant à éviter les surcoupes ou les interférences.

Les séquences précédentes, figures 2D à 2F, sont répétées jusqu'à l'obtention de la pièce finie. L'alternance des opérations d'usinage par enlèvement et par addition de matière permet la réalisation de formes finies et entièrement parachevées, qui seraient strictement impossibles à réaliser par d'autres technologies de mise en forme.

Bien que les opérations d'usinage par enlèvement de matière, selon ces exemples de réalisation, soient présentées dans le cadre d'opérations de fraisage en contournage et en bout, le dispositif objet de l'invention est adapté à tout type d'usinage par enlèvement de matière, notamment des opérations d'usinage par abrasion tel que le polissage ou la rectification.

Figure 4, selon un exemple de réalisation, la tête d'usinage (370) du dispositif objet de l'invention, représentée sans son carter, comprend en permanence au moins deux types d'effecteurs :
- une buse (451) d'usinage additif par projection et fusion coaxiale de poudre ;
- et une broche (440) de fraisage, pour l'usinage par enlèvement de matière.

Une interface de fixation (476) permet de connecter ladite tête d'usinage au bélier de la machine-outil.

Figure 5, selon un mode de réalisation avantageux du dispositif objet de l'invention, la tête d'usinage (370) comprend en permanence quatre effecteurs, soit :
- un dispositif de palpage (460) ;
- et une seconde buse (452) d'usinage additif ;
en plus de la première buse (451) d'usinage additif et de la broche de fraisage (440).

Selon cet exemple de réalisation, chaque dispositif, ou buse (451, 452), d'usinage additif comprend des moyens (453) d'amenée de matériaux sous forme pulvérulente et d'un fluide, dit de confinement, permettant de d'injecter lesdits matériaux dans la buse. Chaque buse est également connectée à des moyens (454) pour y véhiculer un faisceau laser apte à réaliser la fusion de la poudre ainsi injectée.

Selon un exemple de réalisation le laser utilisé est un laser diode d'une puissance de l'ordre 4000 Watt. Ce type de laser est adapté, d'une part, à la réalisation des opérations d'usinage additif lorsqu'il est combiné avec les moyens d'éjection de matériaux pulvérulents, et d'autre part, est également adapté, lorsqu'il est utilisé seul, pour la réalisation d'opérations de soudage.

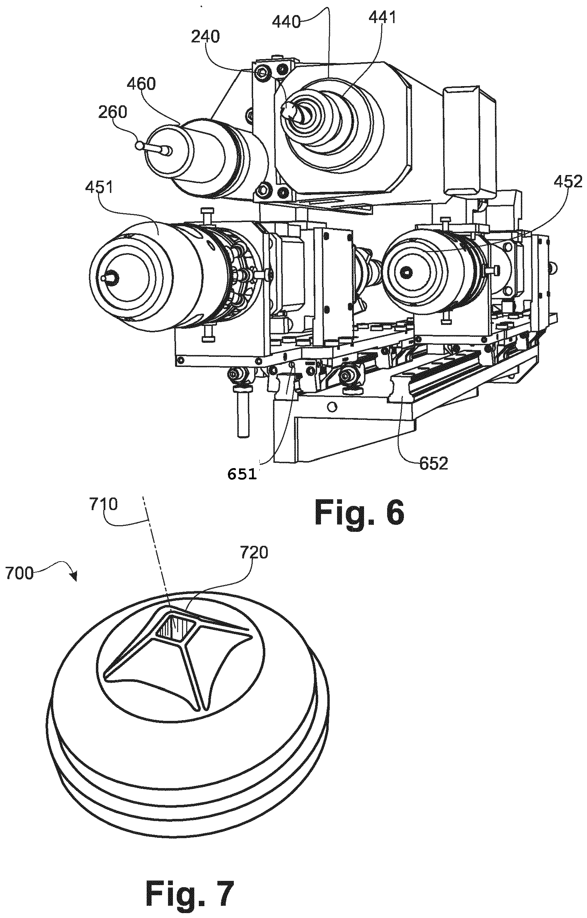

Figure 6, les buses d'usinage additif (451, 452) sont montées dans la tête d'usinage sur des glissières (651, 652). Ainsi, lesdites buses sont escamotées dans la tête d'usinage lors des opérations de mise en forme pour éviter tout risque de collision entre lesdites buses et la pièce ou avec des éléments de la machine. L'utilisation de deux buses (451, 452) d'usinage additif permet de modifier la nature de la matière déposée au cours d'une même phase d'usinage, ou d'utiliser des débits de matière déposée différents, en fonction de la quantité de matière à déposer et de la finesse des détails à créer.

Selon cet exemple de réalisation, les outils de mise en forme sont montés dans la broche (440) par l'intermédiaire d'un attachement (441) normalisé autorisant le changement automatique d'outil. À titre d'exemple non limitatif, l'attachement est choisi dans la série HSK selon la norme ISO 12164-1, dans une dimension adaptée à la puissance de la broche et à sa vitesse de rotation. Selon une configuration connue de l'art antérieur, de tels attachements sont équipés de puces électroniques comprenant des informations géométriques sur les outils, la broche étant équipée d'un lecteur apte à lire ces informations automatiquement lors de chaque changement d'outil et ainsi les intégrer dans le calcul des trajectoires. Ainsi, la machine mettant en oeuvre le dispositif objet de l'invention est avantageusement munie d'un changeur automatique d'outil. Les buses (451, 452) sont alors escamotées lors de chaque changement d'outil.

La broche est avantageusement adaptée à un usinage par enlèvement de matière à grande vitesse de coupe. Ainsi, les surfaces de la pièces sont parachevées sous des efforts de coupe réduits, afin de limiter les déformations tant de la machine que de la pièce au cours de ces opérations.

L'ensemble des effecteurs (451, 452, 440, 460) est toujours présent dans la tête d'usinage de sorte que les diverses opérations d'usinage mises en oeuvre sont réalisées avec une masse embarquée sensiblement constante, au poids de l'outil de mise en forme près.

Selon les exemples de réalisation précédents, les opérations de mise en forme par enlèvement de matière sont réalisées en fraisage en communiquant un mouvement de coupe à l'outil.

Figure 7, selon un exemple de réalisation, adapté à la réalisation d'une pièce (700) présentant des surfaces en symétrie de révolution autour d'un axe (710), ladite pièce est avantageusement réalisée selon un procédé de mise en forme en tournage, en communiquant à la pièce un mouvement de coupe de rotation autour de l'axe (710) de symétrie de la pièce.

À cette fin, en revenant à la figure 3, le plateau (364) de la machine sur lequel la pièce est fixée, est, selon un exemple particulier de réalisation, accouplé à des moyens de motorisation aptes à communiquer audit plateau (364) un mouvement de coupe adapté. Alternativement, la pièce est montée dans le mandrin indexé d'un centre de tournage horizontal ou vertical.

En revenant à la figure 7, la pièce (700) comprend, en outre, une partie (720) réalisée en usinage additif. Selon des variantes de réalisation cette partie est creuse et présente ou non une symétrie de révolution.

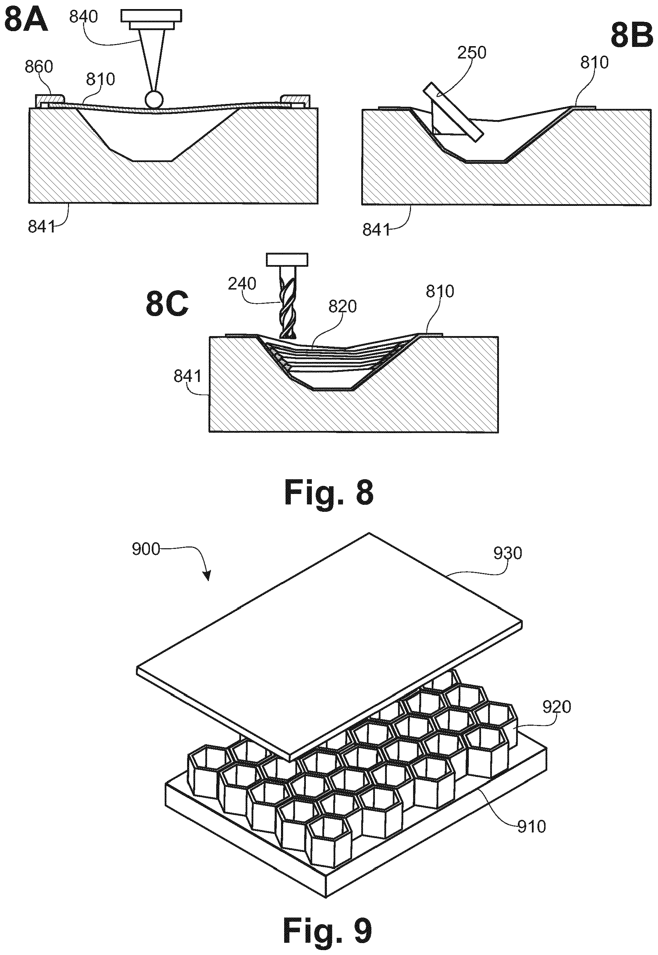

Figure 8, selon un exemple de réalisation du dispositif objet de l'invention celui-ci utilise un substrat en feuille (810) lequel substrat subi, figure 8A, une première opération de mise en forme par formage incrémental. Le formage incrémental est un procédé de mise en forme par déformation plastique décrit par exemple dans le document US 3 342 051 et qui consiste à réaliser un étirage localisé d'un flan au moyen d'un outil décrivant des trajectoires.

Figure 8A, la feuille de métal (810) est maintenue en périphérie par un serre flan (860) sur une matrice (841). Le formage est réalisé par un outil (840) de formage incrémental monté dans la tête de la machine, par exemple dans la broche d'usinage.

Figure 8B, après formage, le flan (810) épouse la forme de la matrice (841). Le dispositif d'usinage additif (250) est alors utilisé, par exemple, pour compenser les pertes locales d'épaisseur du flan consécutives à son étirage. Le dispositif objet de l'invention permet de sélectionner le métal constituant le flan (810) pour ses caractéristiques de formabilité, le procédé d'usinage additif est alors avantageusement utilisé pour déposer sur ledit flan un revêtement lui conférant d'autres caractéristiques telles que de la dureté superficielle ou une résistance à l'oxydation, éventuellement incompatible avec les caractéristiques de formabilité du flan initial. Selon un mode de réalisation, l'opération d'usinage additif est utilisée pour créer des formes qui ne peuvent pas être atteintes par le formage incrémental. Il est par exemple possible de renforcer localement l'épaisseur de la partie formée pour réaliser un bossage destiné à recevoir une fixation par exemple.

Figure 8C, la matière déposée (820) au cours de l'opération d'usinage additif est reprise en usinage par enlèvement de matière de sorte à lui conférer une épaisseur localement précise ou des qualités de surface déterminées.

La réalisation de l'ensemble de ces opérations dans la même phase d'usinage permet de localiser précisément les apports et les enlèvement de matière par rapport à la forme de la surface obtenue en formage, autorisant ainsi la réalisation de pièces en série.

Figure 9, selon un exemple de mise en oeuvre du dispositif objet de l'invention, celui-ci est adapté à la réalisation d'une pièce (900) composite sandwich, telle qu'une dite en nid d'abeilles. Selon un exemple de réalisation, un premier substrat (910) est par exemple usiné par enlèvement de matière de sorte à lui conférer des propriétés géométriques visées. Des raidisseurs (920) sont déposés en usinage additif sur le substrat et, si nécessaire, parachevés en fonction des propriétés géométriques visées. Un deuxième substrat (930) est alors posé au sommet des raidisseurs (920) et soudé à ceux-ci par transparence au moyen du faisceau laser d'une des buses d'usinage additif. Selon un exemple de réalisation des raidisseurs (non représentés),de forme ou d'orientation différente des premiers (920) raidisseur sont déposés sur le deuxième substrat (930) et un troisième substrat (non représenté) soudé sur ceux-ci et ainsi de suite de sorte à obtenir un ensemble stratifié multicouches.

Selon un exemple de réalisation, le premier substrat (910), le deuxième substrat (930) et les raidisseurs (920) sont constitués de matériaux différents.

L'exemple de réalisation de la figure 9 est présenté dans le cas d'une pièce (900) sandwich essentiellement plane, mais l'invention est adapté à l'obtention d'une pièce sandwich de forme complexe, éventuellement non développable, ladite forme complexe étant obtenue par la combinaison de toute ou partie d'opérations d'usinage par enlèvement de matière, par addition et en mise en forme par déformation plastique.

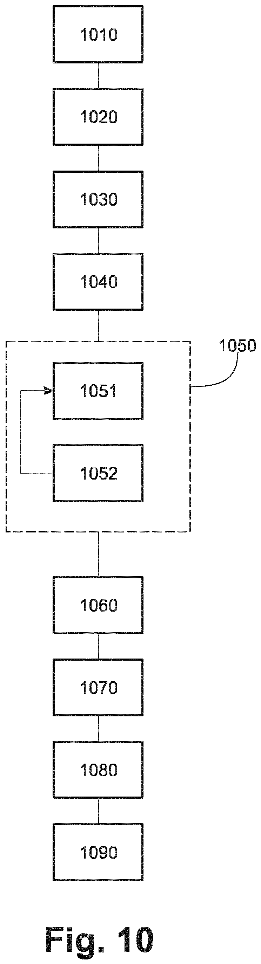

Figure 10, selon un exemple complexe de réalisation, le premier substrat, est positionné (1010) sur une matrice placée sur la table de la machine. Ce premier substrat se présente sous la forme d'un métal en feuille, choisi pour sa formabilité. Au cours d'une opération de formage (1020) ledit premier substrat est plaqué sur la matrice par formage incrémental. Au cours d'une opération (1030) de revêtement, une couche de matière est déposée à la surface dudit substrat par usinage additif. Ainsi le substrat dont l'épaisseur est augmentée de l'épaisseur de cette couche est rigidifié. Au cours d'une opération (1040) d'usinage ablatif la couche de matière déposée lors de l'opération précédente est usinée pour en uniformiser l'épaisseur. Au cours d'une étape (1050) d'usinage additif, des raidisseurs, par exemple en nid d'abeille, sont déposés à la surface dudit substrat. Selon un exemple de réalisation, la dimension des alvéoles ainsi déposées est variable des bords du substrat vers le centre de celui-ci. Cette opération (1050) de dépose comporte des opérations successives d'usinage additif (1051) et d'usinage ablatif (1052). Une opération (1060) d'usinage ablatif permet de reprendre le sommet des alvéoles, de sorte à ce que ce somment décrive une surface non parallèle à la surface du premier substrat. Un deuxième substrat, sous la forme d'une feuille de métal, est placé (1070) dans la machine et serré dans un serre flan en périphérie. Au cours d'une opération (1080) de formage incrémental, ledit deuxième substrat est plaqué sur le sommet des alvéoles. Finalement, au cours d'une opération (1090) de soudage par transparence, ledit deuxième substrat est soudé au sommet desdites alvéoles. Ainsi, le dispositif objet de l'invention, mis en oeuvre au moyen du dispositif objet de l'invention, permet d'obtenir une pièce composite de forme complexe comprenant deux faces non parallèles séparées par des raidisseur dont le raidissement est variable sur la surface, et ceci sans démonter la pièce de la machine.

La description ci-avant et les exemples de réalisation montrent que l'invention atteint les objectifs visés. En particulier elle permet la réalisation automatique d'une pièce en combinant des procédés d'usinage par enlèvement, addition et déformation de la matière, laquelle pièce est constituée de plusieurs matériaux et est réalisée à partir d'un même programme de commande numérique en offrant une possibilité de recalage des trajectoires de chacun des procédés d'usinage, l'un par rapport à l'autre. L'invention est notamment adaptée à la fabrication d'une pièce composite, comprenant des raidisseurs internes, notamment en nid d'abeille.

## Revendications

1. Dispositif pour l'usinage d'une pièce (100, 700), lequel dispositif comprend :
a. une tête d'usinage (370) et des axes (311, 312, 313, 314, 315) motorisés comprenant un axe rotatif (314, 315) pour le déplacement de ladite tête dans un espace dit espace de travail ;
b. des moyens de mise en position et de maintien en position d'une pièce (100) dans ledit espace de travail ;
c. la tête d'usinage comprenant des moyens pour supporter des outils de mise en forme de la matière et des moyens (451, 452) aptes à réaliser un apport de matière, portés en permanence par la tête d'usinage,
**Caractérisé en ce que** lesdits moyens d'apport comprennent deux moyens (451, 452) pour la projection de poudre métallique en fusion, comportant chacun :
ci. une buse (451, 452) comportant un orifice de projection de poudre métallique ;
cii. un dispositif pour la génération d'un faisceau laser coaxial à l'orifice de la buse et apte à réaliser la fusion de la poudre au cours de la projection ;
et **en ce que** les moyens d'apport sont montés dans la tête d'usinage sur des glissières (651, 652) adaptées pour escamoter lesdits moyens.

2. Dispositif selon la revendication 1, dans lequel les outils de mise en forme comprennent un outil de coupe (240).

3. Dispositif selon la revendication 2, comprenant :
f. des moyens (440, 441) pour communiquer un mouvement de coupe à l'outil de coupe (240).

4. Dispositif selon la revendication 2, **caractérisé en ce qu'**il comprend :
g. des moyens (364) pour communiquer un mouvement de coupe à la pièce (700).

5. Dispositif selon la revendication 1, comprenant :
d. des moyens de palpage (260, 460), portés en permanence par la tête d'usinage ;
e. des moyens pour mesurer sur les axes motorisés (311, 312, 313, 314, 315) la position desdits moyens de palpage dans l'espace machine.

6. Dispositif selon la revendication 1, dans lequel les outils de mise en forme comprennent un outil (840) de formage par déformation plastique de la matière.

## Patentansprüche

1. Vorrichtung zum Bearbeiten eines Werkstücks (100, 700), welche Vorrichtung umfasst:
a. einen Bearbeitungskopf (370) und motorisierte Achsen (311, 312, 313, 314, 315), die eine Drehachse (314, 315) für die Verlagerung des Kopfes in einem Arbeitsraum genannten Raum umfassen;
b. Mittel zum Positionieren und Inpositionhalten eines Werkstücks (100) im Arbeitsraum;
c. wobei der Bearbeitungskopf Mittel umfasst, um Werkzeuge zum Umformen des Materials zu halten, und Mittel (451, 452), die dazu in der Lage sind, einen Materialauftrag auszuführen, welche dauerhaft vom Bearbeitungskopf getragen werden,
**dadurch gekennzeichnet, dass** die Auftragsmittel zwei Mittel (451, 452) für das Sprühen von geschmolzenem Metallpulver umfassen, welche jedes umfassen:
ci. eine Düse (451, 452), die eine Öffnung zum Sprühen von Metallpulver umfasst;
cii. eine Vorrichtung für das Erzeugen eines Laserstrahls, der zur Öffnung der Düse koaxial und dazu in der Lage ist, das Schmelzen des Pulvers während des Sprühens auszuführen; und dadurch, dass die Auftragsmittel im Bearbeitungskopf auf Schienen (651, 652) montiert sind, die dafür geeignet sind, die Mittel einzufahren.

2. Vorrichtung nach Anspruch 1, wobei die Umformwerkzeuge ein Schneidwerkzeug (240) umfassen.

3. Vorrichtung nach Anspruch 2, umfassend:
f. Mittel (440, 441), um eine Schnittbewegung an das Schneidwerkzeug (240) zu kommunizieren.

4. Vorrichtung nach Anspruch 2, **dadurch gekennzeichnet, dass** sie umfasst:
g. Mittel (364), um eine Schnittbewegung an das Werkstück (700) zu kommunizieren.

5. Vorrichtung nach Anspruch 1, umfassend:
d. Abtastmittel (260, 460), die dauerhaft vom Bearbeitungskopf getragen werden;
e. Mittel, um an den motorisierten Achsen (311, 312, 313, 314, 315) die Position der Abtastmittel im Maschinenraum zu messen.

6. Vorrichtung nach Anspruch 1, wobei die Umformwerkzeuge ein Werkzeug (840) zum Umformen durch plastische Verformung des Materials umfassen.

## Claims

1. Device for the machining a part (100, 700), said device comprising:
a. a machining head (370) and motorized shafts (311, 312, 313, 314, 315) comprising a rotary shaft (314, 315) for the displacement of said head in a space known as the working space;
b. means for positioning and for maintaining in position a part (100) in said working space;
c. the machining head comprising means for supporting shaping tools for shaping the material and means (451, 452) that are able to add material, constantly borne by the machining head,
**characterized in that** said means for adding include two means (451, 452) for projecting melted metal powder, each comprising:
ci. a nozzle (451, 452) comprising an orifice for the projection of metal powder;
cii. a device for the generating of a laser beam coaxial to the orifice of the nozzle and able to melt the powder during the projection;
and **in that** the means for adding are mounted in the machining head on sliders (651, 652) suitable for retracting said means.

2. Device according to claim 1, wherein the tools for shaping include a cutting tool (240).

3. Device according to claim 2, comprising:
f. means (440, 441) for communicating a cutting movement to the cutting tool (240).

4. Device according to claim 2, **characterized in that** it comprises:
g. means (364) for communicating a cutting movement to the part (700).

5. Device according to claim 1, comprising:
d. probing means (260, 460), constantly borne by the machining head;
e. means for measuring on the motorized shafts (311, 312, 313, 314, 315) the position of said probing means in the machine space.

6. Device according to claim 1, wherein the tools for shaping include a tool (840) for forming by plastic deformation of the material.
